(19)
Europäisches
Patentamt
European
Patent Office
Office européen
des brevets

(11) **EP 2 253 424 B1**

(12) **EUROPEAN PATENT SPECIFICATION**

(45) Date of publication and mention
of the grant of the patent:
**03.04.2013 Bulletin 2013/14**

(51) Int Cl.:
***B23Q 16/10*** (2006.01)       ***B23Q 1/28*** (2006.01)

(21) Application number: **09705567.7**

(22) Date of filing: **26.01.2009**

(86) International application number:
**PCT/JP2009/051160**

(87) International publication number:
**WO 2009/096348 (06.08.2009 Gazette 2009/32)**

(54) **POWER-BOOSTING DEVICE FOR CLAMPING APPARATUS OF INDEX TABLE**

LEISTUNGSVERSTÄRKUNGSVORRICHTUNG FÜR AUFSPANNVORRICHTUNG EINES RUNDTAKTTISCHES

DISPOSITIF D'AMPLIFICATION DE PUISSANCE POUR APPAREIL DE SERRAGE DE TABLE D'INDEXAGE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **01.02.2008  JP 2008023010**

(43) Date of publication of application:
**24.11.2010  Bulletin 2010/47**

(73) Proprietor: **Tsudakoma Kogyo Kabushiki Kaisha Kanazawa-shi, Ishikawa-ken 921-8650 (JP)**

(72) Inventor: **NITTA, Tetsuya Kanazawa-shi Ishikawa-ken 921-8650 (JP)**

(74) Representative: **Samson & Partner Widenmayerstrasse 5 80538 München (DE)**

(56) References cited:
**EP-A1- 0 782 901       JP-A- 2001 277 074
JP-A- 2001 277 074       JP-A- 2002 018 679
JP-A- 2002 018 679**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical Field

The present invention relates to a force increasing device for increasing the clamping force of a clamping device that restricts the rotation of a rotating shaft of an indexing table.

Background Art

In an indexing device for a machine tool, that is, an indexing table, a clamping device is used to keep a rotating shaft of a working table, which is to be subjected to indexing rotation, in a stationary state against external force applied during working of a workpiece. There are various types of clamping devices. In an example of a clamping device, a clamped member provided integrally with one of a frame of an indexing table and a rotating shaft is pressed against the other by a moving member movable in an axial direction of the rotating shaft, and the rotating shaft and the frame are combined by frictional force produced between the other and the unclamped member. In the clamping device of this type, the rotating shaft is clamped via the clamped member so as not to rotate relative to the frame.

Further, in the clamping device of this type, the force for clamping the rotating shaft depends on the force of the moving member for pressing the unclamped member (pressing force). Accordingly, a clamping device is known which is equipped with a force increasing device that increases the pressing force of a moving member and that includes a plurality of rolling bodies provided at an end of the moving member opposing an unclamped member, and a first guide surface and a second guide surface serving as guide surfaces for the rolling bodies and respectively provided in the moving member and a frame.

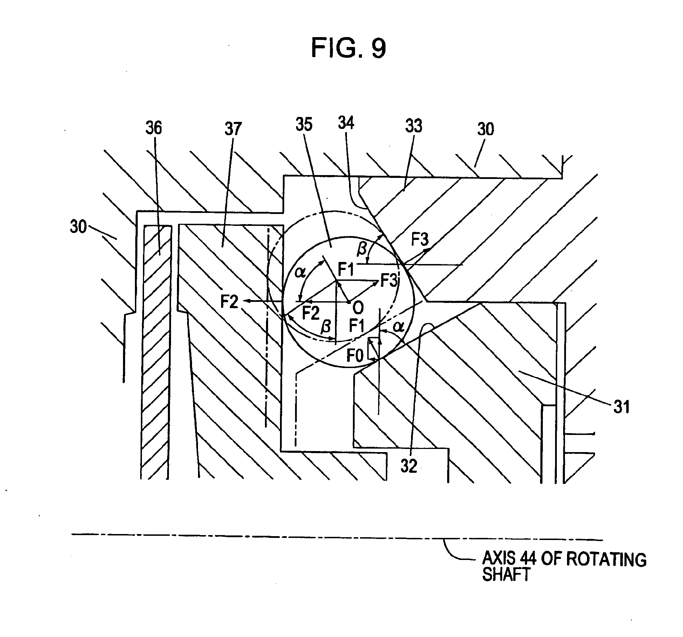

Fig. 9 illustrates a force increasing device in a clamping device of the above-described type disclosed in Patent Document 1. The force increasing device of the clamping device includes a moving member 31 that forms a piston of a fluid-pressure cylinder device serving as a pressing-force generating device, that moves in an axial direction of a rotating shaft, and that has a first guide surface 32 for a rolling body 35, and a guide member 33 that is fixed to a frame 30 so as to form a cylinder of the fluid-pressure cylinder device and to surround the moving member 31, and that has a second guide surface 34 for the rolling body 35. Further, an intermediate member 37 for transmitting force from the rolling body 35 to an unclamped member 36 is provided between the unclamped member 36 and the rolling body 35 in a manner such as to be movable in the axial direction. The first guide surface 32 is inclined with respect to a first inclination reference defined by a plane orthogonal to the axis of the rotating shaft, and the second guide surface 34 is inclined with respect to a second inclination reference defined by the axis of the rotating shaft. The first guide surface 32 and the second guide surface 34 oppose each other to form a V-groove. A plurality of steel balls serving as the rolling body 35 are provided between the V-groove and the intermediate member 37 are in contact therewith.

When $\alpha$ represents an inclination angle of the first guide surface 32 with respect to the first inclination reference, $\beta$ represents an inclination angle of the second guide surface 34 with respect to the second inclination reference, F0 represents a force for advancing the moving member 31, which forms the piston of the fluid-pressure cylinder device, in the axial direction of the rotating shaft, and F1 represents a force applied to the rolling body 35 by the moving member 31, more specifically, a force applied from the first guide surface 32 to the center O of the rolling body 35 by the moving member 31, $F1 = F0/\cos\alpha$ because of an inclination action, and the force F1 is greater than F0. Further, the force F1 is divided into a force F2 acting on the unclamped member 36 via the intermediate member 37, and a force F3 acting on the second guide surface 34. F2 and F3 are given by the following calculation expressions.

$$F2 = F0 + F0 \times \tan\alpha \times \tan\beta$$

$$= F0 (1 + \tan\alpha \times \tan\beta)$$

$$F3 = F0 \times \tan\alpha / \cos\beta$$

According to the above expressions, since the force F2 acting on the unclamped member 36 increases as the inclination angles $\alpha$ and $\beta$ increase, the unclamped member 36 is pressed by the rolling body 35 with the force that increases as the inclination angles $\alpha$ and $\beta$ increase, and clamps the rotating shaft with a larger frictional force being disposed therebetween. Hence, to further increase the clamping force of the clamping device, the inclination angles of the first guide surface 32 and the second guide surface 34 with respect to their respective inclination references are set to be as large as possible so that the unclamped member 36 is pressed by the rolling body 35 with a large force.

In other words, the moving speed of the rolling body 35 in the axial direction is made lower than the moving speed of the moving member 31. By increasing the inclination angles of the first guide surface 32 and the second guide surface 34, the moving speed of the rolling body 35 in the radial direction of the rotating shaft increases, and the moving speed thereof in the axial direction decreases to be lower than the moving speed of the moving member 31 in the axial direction.

However, if the moving speed of the rolling body 35 in the axial direction is made lower than the moving speed of the moving member 31 in the axial direction in order to increase the clamping force of the clamping device, the moving amount of the moving member 31 from a standby position (clamping-operation start position) to a clamp position to press the unclamped member 36 against the frame 30 is larger than in a clamping device having no force increasing device. For this reason, the clamping device including the force increasing device takes more time from when indexing driving of the rotating shaft stops to when the clamping force actually acts on the unclamped member 36 than the clamping device including no force increasing device.

Therefore, the indexing table equipped with the clamping device using the force increasing device needs more extra waiting time from when the rotating shaft stops at a predetermined index angle to when the rotating shaft is clamped to allow working, than the indexing table using no force increasing device. Although a great clamping force can be obtained, working efficiency for a workpiece deteriorates. Particularly when one workpiece is subjected to indexing multiple times, the above extra waiting time accumulates, and therefore, the working efficiency of the workpiece deteriorates remarkably.

In the clamping device including the force increasing device of this type, to further increase the clamping force, the inclination angles $\alpha$ and $\beta$ of the guide surfaces 32 and 34 are further increased, and the rolling bodies 35 are moved at a speed lower in the axial direction than the moving speed of the moving member 31. However, this causes the necessity to increase the moving amount of the moving member 31. To ensure a large moving amount of the moving member 31, the length of the force increasing device in the axial direction increases inevitably. For this reason, the size of the clamping device, and the size of the indexing table itself are increased.

EP 0 782 901 A1 doscloses a force increasing device for a tool holder turret with cylinder-piston means operating with compressed air for moving a locking and release element with teeth axially. The tool-holder turret includes a mechanism for amplifying the axial thrust generated by preloaded springs, the mechanism holding the locking element mechanically in the position in which the turret is locked, by means of a plurality of balls that can be radially inserted between and released from facing walls, including at least one conical surface, of the locking element and of a second, stationary tubular element. In said force increasing mechanism, the conical surface serves only to guide the balls into the space between the inclined walls that generate the wedge effect. When the balls enter the space, the first tubular element has already reached the meshed position where the teeth are meshed with the teeth. The first tubular element is moved to the meshed position only by the action of compressed air. Hence, the balls do not need to press (push) the first tubular element to the meshed position.

Patent Document 1: Japanese Patent No. 3713190

Disclosure of Invention

Problems to be Solved by the Invention

Accordingly, an object of the present invention is to obtain, in a force increasing device of a clamping device for an indexing table, a large clamping force without reducing working efficiency of a workpiece and while limiting the length in the axial direction of a rotating shaft.

Means for Solving the Problems

While the invention is defined in the independent claims further aspects of the invention are set forth in the dependent claims, the drawings and the following description.

The present invention provides a force increasing device (3) of a clamping device for an indexing table, including a moving member (5) that has a first guide surface (6) inclined with respect to a first inclination reference defined by a plane orthogonal to an axis of a rotating shaft (4) to be rotated for indexing and that is movable in a direction of the axis of the rotating shaft (4); a frame (7) that has a second guide surface (8) inclined with respect to a second inclination reference defined by the axis of the rotating shaft (4) and that supports the rotating shaft (4) rotatably; and a plurality of rolling bodies (10) in contact with both guide surfaces (6, 8) of a V-groove (9) formed by the first guide surface (6) and the second guide surface (8).

The moving member (5) presses a clamped member (18) provided integrally with either one of the frame (7) and the rotating shaft (4) against the other via the plurality of rolling bodies (10) so as to increase a pressing force of the moving member (5) and to transmit the pressing force to the clamped member (18). A guide region of at least one of the first guide surface (6) and the second guide surface (8) corresponding to a former moving process part of a moving process in which the moving member (5) moves from a standby position to a clamp position to press the clamped member (18) is inclined with respect to the inclination reference at a smaller angle than a guide region corresponding to a latter moving process part.

At least one of the first guide surface (6) and the second guide surface (8) includes a first inclined face (6a, 8a) serving as the guide region corresponding to the former moving process part of the moving member (5) and a second inclined face (6b, 8b) provided adjacent to the first inclined face (6a, 8a) and serving as the guide region corresponding to the latter moving process part of the moving member (5). The first inclined face (6a, 8a) is inclined with respect to the inclination reference at a smaller angle than the second inclined face (6b, 8b).

Further, at least one of the first guide surface (6) and the second guide surface (8) forms a curve in a cross section including the axis of the rotating shaft (4), and an inclination of a tangent to the curve with respect to the inclination reference gradually increases from a portion corresponding to the standby position of the moving member (5) toward a portion corresponding to the clamp position of the moving member (5).

Advantages

According to the invention of Claims 1 and 4, the rolling bodies move in the axial direction at a higher speed in the former moving process part of the moving member than in the latter moving process part. Further, the rolling bodies can press the clamped member with a larger pressing force in the latter moving process part of the moving member than in the former moving process part. Hence, the rolling bodies can quickly move to a position where a large pressing force is necessary, and can press the clamped member with a sufficient pressing force after reaching the position. Thus, a sufficient frictional force is generated between the frame or the rotating shaft, and the clamped member, and relative rotation between the rotating shaft and the frame is heavily restricted via the clamped member provided integrally with the one of the frame (7) and the rotating shaft (4). The rotating shaft is firmly clamped at the clamp position of the moving member.

With the above-described advantages, the waiting time from when indexing rotation is completed to when the rotating shaft is clamped to allow working of a workpiece can be made shorter than in a case in which the force increasing device of the present invention is not used. Comparing the cases in which the force increasing device of the present invention is applied and not applied, without changing the above-described waiting time, when the force increasing device of the present invention is applied, the moving time of the rolling bodies is increased by decreasing the degree of speed reduction of the rolling bodies in the former moving process part of the moving member, while the moving time of the rolling bodies can be increased and the degree of speed reduction of the rolling bodies can be increased in the latter moving process part of the moving member. Compared with the case in which the force increasing device of the present invention is not applied, the force increasing effect can be enhanced further. Moreover, since the degree of speed reduction of the rolling bodies is decreased and the moving amount of the moving member in the axial direction is decreased in the former moving process part of the moving member, the length of the force increasing device in the axial direction can be limited.

According to the invention of Claim 2, the degree of speed reduction of the rolling bodies, in other words, the degree of force increase is fixed through each of the former moving process part and the latter moving process part of the moving member. Hence, the rolling bodies can accurately press the clamped member with desired pressing forces. Thus, even when the clamped member or the like is worn because of a long time use and the moving amount of the moving member to the clamp position changes, the clamping operation for the rotating shaft is reliably carried out with a predetermined clamping force.

The guide surface may be formed by a curve in a cross section including the axis of the rotating shaft. In this case, the inclination of the tangent to the curve with respect to the inclination reference gradually increases or decreases in the axial direction. According to the invention of Claim 3, at least one of the first guide surface and the second guide surface forms a curve in the cross section including the axis of the rotating shaft, and the inclination of the tangent to the curve with respect to the inclination reference gradually increases from the portion corresponding to the standby position of the moving member toward the portion corresponding to the clamp position of the moving member. Hence, the rolling bodies can quickly move to the position where a large pressing force is necessary, and can press the clamped member with a sufficient pressing force after reaching the position. Further, since the force with which the rolling bodies press the clamped member gradually increase with the movement of the moving member, the pressing force can be prevented from becoming impact force. Accordingly, it is possible to suppress breakage and wear of the guide surface and the rolling bodies.

Brief Description of Drawings

[Fig. 1] Fig. 1 is an overall cross-sectional view of an indexing table 1 according to an embodiment of the present invention.
[Fig. 2] Fig. 2 is a detailed cross-sectional view of a clamping device 2 shown in Fig. 1, in which a moving member 5 is at a standby position.
[Fig. 3] Fig. 3 is a conceptual view of a first guide surface 6 provided in the moving member 5 and a second guide surface 8 provided in a cylinder 21.
[Fig. 4] Fig. 4 illustrates a state in which the moving member 5 is at a clamp position, in contrast to Fig. 2.
[Fig. 5] Fig. 5 is a detailed cross-sectional view of a clamping device 2 according to another embodiment of the present invention.
[Fig. 6] Fig. 6 is a detailed cross-sectional view of a clamping device 2 according to a further embodiment of the present invention.
[Fig. 7] Fig. 7 is a detailed cross-sectional view of a clamping device 2 according to an even further embodiment of the present invention.
[Fig. 8] Fig. 8 is a detailed cross-sectional view of a clamping device 2 according to a still even further embodiment of the present invention.
[Fig. 9] Fig. 9 is an explanatory view of a force increasing mechanism in a clamping device of the related art.

Reference Numerals

| | |
|---|---|
| 1: | indexing table |
| 2: | clamping device |
| 3: | force increasing device |
| 4: | rotating shaft |
| 5: | moving member |
| 6: | first guide surface |
| 6a: | first inclined face |
| 6b: | second inclined face |
| 7: | frame |
| 8: | second guide surface |
| 8a: | first inclined face |
| 8b: | second inclined face |
| 9: | V-groove |
| 10: | rolling body |
| 14: | bearing sleeve |
| 15: | bearing |
| 16: | worm wheel |
| 17: | worm |
| 18: | clamp disc |
| 19: | clamp surface |
| 20: | fluid-pressure cylinder device |
| 21: | cylinder |
| 22: | pressure chamber |
| 23: | disc spring |
| 25: | fluid passage |
| 26: | stopper |
| 27: | clamp member |
| 28: | cylinder base |
| 30: | frame |
| 31: | moving member |
| 32: | first guide surface |
| 33: | guide member |
| 34: | second guide surface |
| 35: | rolling body |
| 36: | clamped member |
| 37: | intermediate member |
| 40: | working table |
| 41: | bolt |
| 42: | bolt |
| 43: | bolt |
| 44: | axis |
| 45: | bolt |
| 46: | bolt |

Best Modes for Carrying Out the Invention

The present invention is applied to an indexing apparatus installed in a machine tool and used to index the working angle of a workpiece, that is, an indexing table.

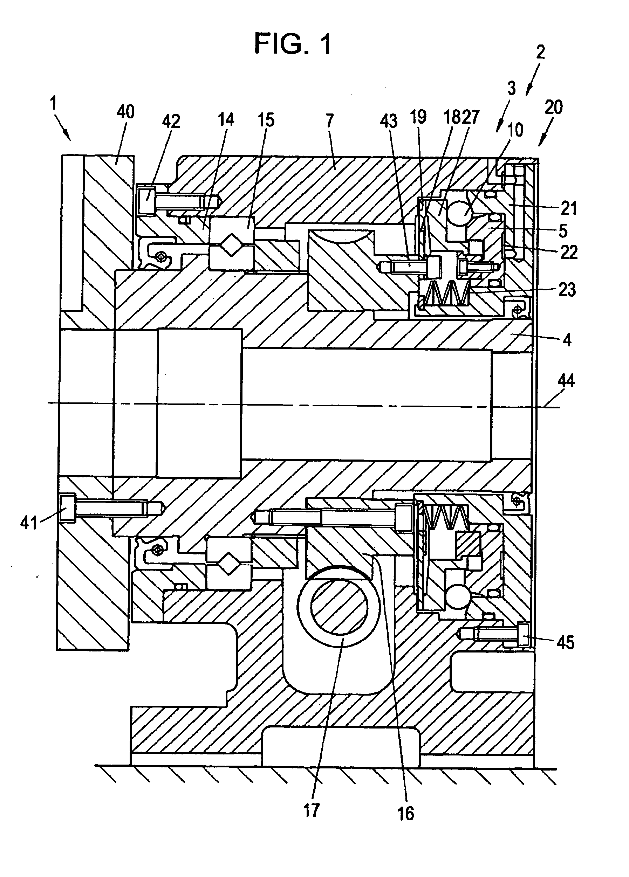

Fig. 1 illustrates an example of an indexing table 1 according to one embodiment of the present invention to which the present invention is applied. The indexing table 1 includes a working table 40 on which a workpiece is held directly or by a mounting jig, and a rotating shaft 4 on which the working table 40 is fixed. The rotating shaft 4 is rotatably mounted in a frame 7 so as to be rotated for indexing. As the working table 40, not only a type having a work holding surface orthogonal to the rotating shaft 4, as in the embodiment, but also a crank type and a cradle type used in a tilting indexing table and having a workpiece holding surface parallel to the rotating shaft 4 are known, and the present invention is also applied to the indexing table 1 including the types.

The indexing table 1 will be described in more detail. The working table 40 is fixed to one end of the rotating shaft 4 by bolts 41 or the like. The rotating shaft 4 is hollow in the embodiment, and an outer ring is rotatably supported in the frame 7 by a bearing sleeve 14 with a bearing 15 fixed to the frame 7 being disposed therebetween.

The indexing table 1 also includes, as a driving means for indexing rotation of the rotating shaft 4, a worm wheel 16 fixed to the rotating shaft 4, a worm 17 rotatably supported by the frame 4 and meshed with the worm wheel 16, and an unillustrated motor for rotationally driving the worm 17. While a worm gear mechanism is adopted as the driving means for the rotating shaft 4 in the embodiment, a built-in motor, that is, a so-called DD motor may be formed by a rotor provided in the rotating shaft 4 and a stator provided in the frame 4, and the built-in motor may serve as the driving means for the rotating shaft 4, without using a driving transmission mechanism such as a gear.

A clamping device 2 is provided at the other end of the rotating shaft 4. The clamping device 2 includes a clamp disc 18 serving as a clamped member assembled by bolts 43 in a manner such as not to rotate relative to the rotating shaft 4, a clamp member 27 provided adjacent to the clamp disc 18 and movably in the axial direction of the rotating shaft 4, a force increasing device 3 provided adjacent to the clamp member 27, and a fluid-pressure cylinder device 20 serving as a pressing-force generating device. The clamping device 2 presses the clamp disc 18 against a clamp surface 19 provided on the frame 7 via the clamp member 27, thereby clamping the clamp disc 18 between the clamp member 27 and the clamp surface 19 and holding the rotating shaft 4 in a manner such as not to rotate relative to the rotating shaft 4, that is, clamping the rotating shaft 4.

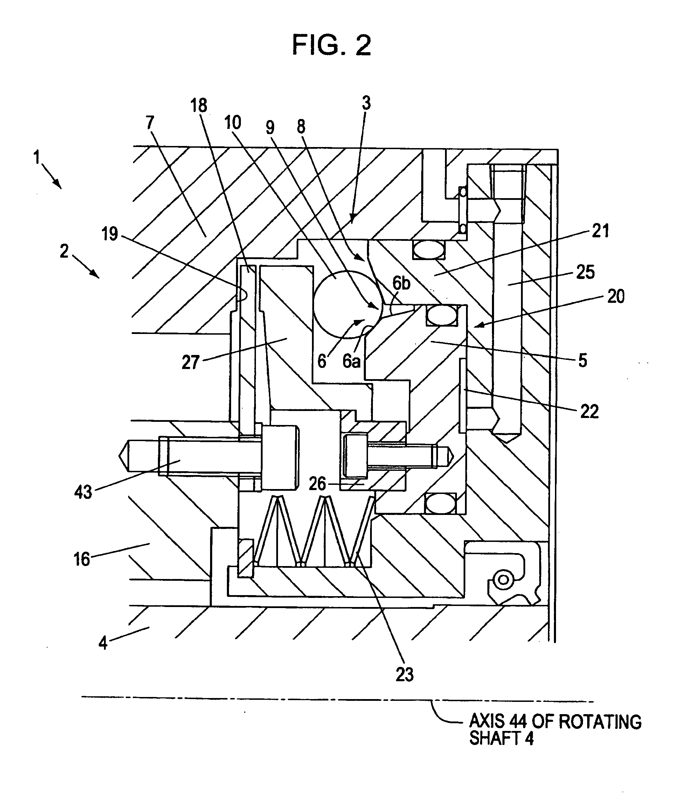

Fig. 2 illustrates details of the clamping device 2 in the indexing table. The fluid-pressure cylinder device 20 serving as the pressing-force generating device is provided on an outer side of the rotating shaft 4 in the radial direction and in the shape of a ring coaxial with the rotating shaft 4, and includes a cylinder 21 extending in a direction of an axis 44 of the rotating shaft 4, and a moving member 5 serving as a piston. The cylinder 21 is fixed to the frame 7 by bolts 45, so that a pressure chamber 22 is provided between the cylinder 21 and an end face of the moving member 5 opposite the clamp disc 18.

The moving member 5 is always biased toward the pressure chamber 22 by a biasing member such as a compression coil spring, in the embodiment, by a plurality of disc springs 23 retained by a boss portion of the cylinder 21. When the rotating shaft 4 is clamped, working fluid for clamping is supplied from an unillustrated fluid supply source to the pressure chamber 22 through a fluid passage 25 provided in the cylinder 21.

Further, a stopper 26 of the clamp member 27 is fixed to an inner side of the moving member 5 in the radial direction close to the clamp disc 18. The clamp member 27 is retained by the stopper 26 so that movement thereof toward the clamp disc 18 in the direction of the axis 44 is restricted.

The moving member 5 serving as the piston of the fluid-pressure cylinder device 20 and the cylinder 21 also serve as constituent members of the force increasing device 3. That is, the force increasing device 3 increases the pressing force of the moving member 5 by a first guide surface 6 provided at a boundary between a leading end of the moving member 5, that is, an end close to the clamp disc 18 and the cylinder 21, a second guide surface 8 provided at a boundary between a leading end of the cylinder 21, that is, an end close to the clamp disc 18 and the moving member 5 in a manner such as to form a V-groove 9 with the first guide surface 6, and a plurality of rolling bodies 10 in contact with both of the guide surfaces 6 and 8. The pressing force of the moving member 5 is increased to a predetermined pressing force, and presses the clamp disc 18 against the clamp surface 19 of the frame 7 via the clamp member 27. The first guide surface 6 is inclined with respect to a first inclination reference defined by a plane orthogonal to the axis 44 of the rotating shaft 4, and the second guide surface 8 is inclined with respect to a second inclination reference defined by the axis 44 of the rotating shaft 4.

The principle of the force increasing action of the force increasing device 3 is similar to that adopted in the background art, and therefore, a description thereof is omitted.

In this embodiment, a plurality of rolling bodies are balls made of steel or the like, are arranged in an annular form and stored in an annular space formed on an outer side of the rotating shaft 4 in the radial direction by the first guide surface 6, the second guide surface 8, and the clamp member 27 while being in contact with the guide surfaces 6 and 8 and the clamp member 27. The rolling bodies 10 equally increase the pressing force of the moving member 5 around the rotating shaft 4, and transmit the pressing force to the clamp member 27. As the rolling bodies 10, rollers made of steel or the like are used instead of the balls. When rollers are used, the first guide surface 6 and the second guide surface 8 are not formed by conical surfaces, unlike the embodiment, but are formed by a plurality of flat surfaces arranged around the rotating shaft 4 in the circumferential direction and inclined with respect to their respective inclination references.

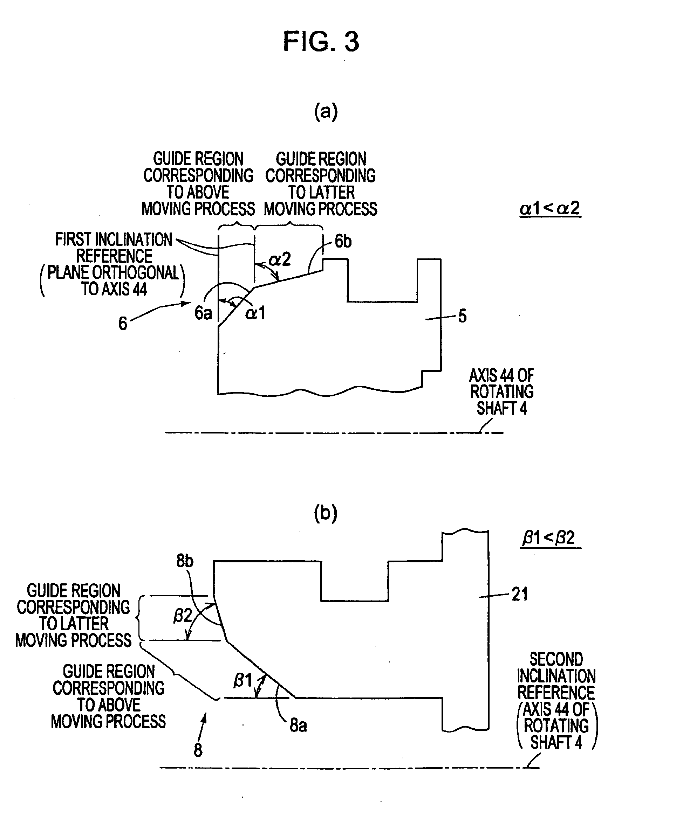

The second guide surface 8 provided on the cylinder 21 is formed by one inclined surface. In contrast, as shown in a conceptual view of Fig. 3(a), the first guide surface 6 provided on the moving member 5 is formed by two inclined faces inclined at different angles to the first inclination reference defined by the plane orthogonal to the axis 44 of the rotating shaft 4, that is, a first inclined face 6a provided at the leading end and a second inclined face 6b provided adjacent to the inclined surface 6a. The first inclined face 6a and the second inclined face 6b respectively have inclination angles $\alpha1$ and $\alpha2$, and the inclination angle $\alpha1$ is smaller than the inclination angle $\alpha2$.

In this embodiment, when the moving member 5 is at a standby position (clamping-operation start position)(a state shown in Fig. 2), a gap between the clamp member 27 and the clamp disc 18 and a gap between the clamp surface 19 of the frame 7 and the clamp disc 18 are substantially equal. In the embodiment, of a process in which the moving member 5 moves from the standby position to a clamp position to press the clamp disc 18 against the clamp surface 19 of the frame 7 with a predetermined force, a process in which the moving member 5 moves from the standby position to a pressing start position for the clamp disc 18, that is, a process in which the clamp member 27 is pressed by the rolling bodies 10 into contact with the clamp disc 18 is referred to as a "former moving process part of the moving member 5". In the embodiment, when the moving member 5 moves in the former moving process part, the total gap between the clamp member 27 and the clamp surface 19 becomes about half the gap provided when the moving member 5 is at the standby position. Further, a moving process in which the moving member 5 further moves from the pressing start position to the clamp position to press the clamp disc 18 against the clamp surface 19 of the frame 7 with the predetermined force is referred to as a "latter moving process part of the moving member 5" in the embodiment. In the latter moving process part of the moving member 5, the moving member 5 presses the clamp member 27 via the rolling bodies 10, and the clamp member 27 bends the clamp disc 18 into contact with the clamp surface 19. The first inclined face 6a of the first guide surface 6 is a region that guides the rolling bodies 10 with the second guide surface 8 when the moving member 5 is in the former moving process part, and the first inclined face 6a corresponds to "a guide region corresponding to the former moving process part" in Claim 1. Further, the second inclined face 6b is a region that guides the rolling bodies 10 with the second guide surface 8 when the moving member 5 is in the latter moving process part, and corresponds to "a guide region corresponding to the latter moving process part" in Claim 1.

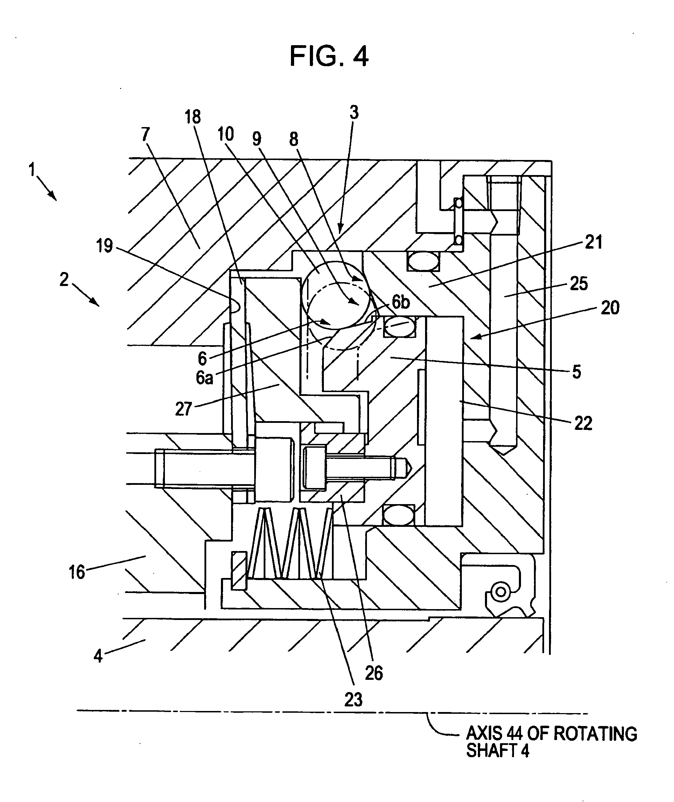

Next, operation of the present invention will be described with reference to Figs. 2 and 4. Fig. 2 illustrates a state in which the clamping device 2 unclamps the rotating shaft 4, that is, a state in which the moving member 5 is at the standby position in the former moving process part. The moving member 5 serving as the piston of the fluid-pressure cylinder device 20 is biased by the disc springs 23 in a direction away from the clamp disc 18 (unclamp direction), the clamp member 27 is separate from the clamp disc 18, and the rotating shaft 4 is in a free state.

After rotation for indexing of the rotating shaft 4 is completed, working fluid for clamping is supplied to the pressure chamber 22, and the moving member 5 is moved by the pressure of the working fluid against the spring forces of the disc springs 23 from the standby position to the pressing start position for the clamp disc 18. In the former moving process part of the moving member 5, the rolling bodies 10 are guided by the first inclined face 6a of the moving member 5 and the second guide surface 8 of the cylinder 21. The inclination angle $\alpha1$ of the first inclined face 6a is smaller than the inclination angle $\alpha2$ of the second inclined face 6b, so that the rolling bodies 10 can quickly move toward the clamp disc 18 at a speed higher than the moving speed in the latter moving process part.

Fig. 4 illustrates a state in which the clamping device 2 is clamping the rotating shaft 4, that is, a state in which the moving member 5 is placed at the last position in the latter moving process part, that is, the clamp position after reaching the pressing start position. In this state, the rolling bodies 10 are guided by the second inclined face 6b of the moving member 5 and the second guide surface 8 of the cylinder 21. Two-dot chain lines in the figure indicate positions of the moving member 5, the rolling bodies 10, and the clamp member 27 when the moving member 5 is in the state shown in Fig. 2, that is, at the standby position. The inclination angle $\alpha2$ of the second inclined face 6b is larger than the inclination angle $\alpha1$ of the first inclined face 6a. Thereby, the pressing force of the moving member 5 is further increased, and the clamp member 27 presses the clamp disc 18 hard with a pressing force larger than the pressing force that can be applied in the former moving process part, and clamps the clamp disc 18 in cooperation with the clamp surface 19 of the frame 7.

In this way, in the embodiment, the motion of the rolling bodies 10 is changed in two steps by the first guide surface 6 formed by the two inclined surfaces 6a and 6b having different inclination angles. That is, in the former moving process part of the moving member 5, the rolling bodies 10 are quickly moved in the direction of the axis 44 by the smaller inclination angle of the inclined face 6a (guide region corresponding to the former moving process part) of the guide surface 6, thereby increasing the speed of the clamping operation. In contrast, in the latter moving process part of the moving member 5, the degree of force increase is increased by the larger inclination angle of the inclined face 6b (region corresponding to the latter moving process part) of the guide surface 6, thereby applying a large pressing force to the clamp disc 18.

In the embodiment, the moving process in which the moving member 5 moves from the standby position until the clamp member 27 is pressed by the rolling bodies 10 into contact with the clamp disc 18 serves as the former moving process part of the moving member 5, and a subsequent moving process serves as the latter moving process part. However, it is appropriately determined which position at which the former moving process part starting from the standby position ends, and for example, is preferably determined as follows. For example, the end point of the former moving process part may be determined to include a position where the total gap between the clamp member 27 and the clamp surface 19 becomes 60% or less of the gap provided when the moving member 5 is at the standby position, and a subsequent moving process may serve as the latter moving process part. Alternatively, for example, the end point of the former moving process part may be determined to include at most a position where the clamp member 27 comes into contact with the clamp disc 18 and the total gap between the clamp member 27 and the clamp surface 19 is removed, and a subsequent moving process may serve as the latter moving process part. While the clamp member 27 is provided as an intermediate member and the rolling bodies 10 press the clamp disc 18 via the intermediate member in the embodiment, the rolling bodies 10 may directly press the clamp disc 18 without any intermediate member, as defined in claim 4 . In this case, the end point of the former moving process part may be determined to include at least a position where the gap between the clamp surface 19 and the clamp disc 18 becomes 60% or less of the gap provided when the moving member 5 is at the standby position, and may be determined to include at most a position where the gap between the clamp surface 19 and the clamp disc 18 is removed.

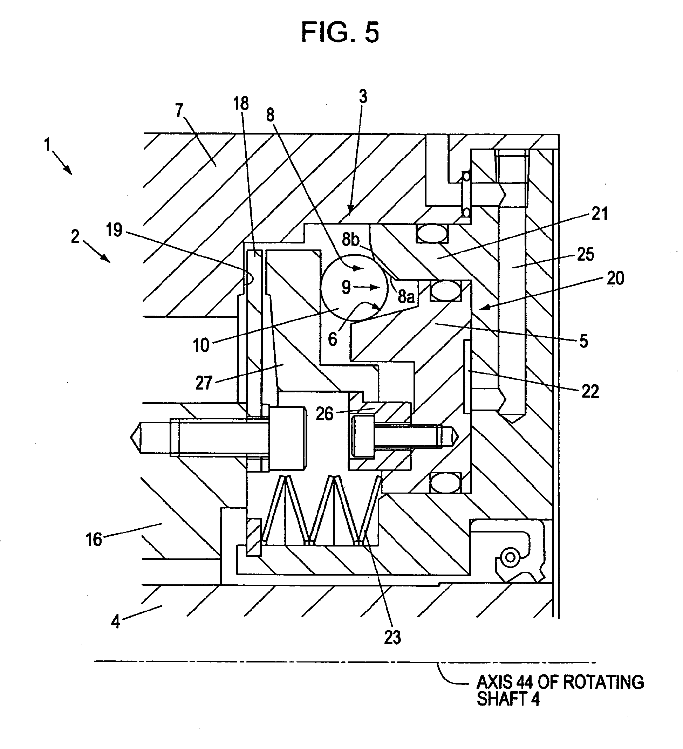

Fig. 5 illustrates another embodiment of the present invention, in which a first guide surface 6 provided on a moving member 5 is formed by one inclined face. In contrast, as shown in a conceptual view of a cylinder 21 in Fig. 3(b), a second guide surface 8 provided on the cylinder 21 is formed by two inclined faces having different inclination angles with respect to a second inclination reference defined by an axis 44 of a rotating shaft 4, that is, a second inclined face 8b provided at a leading end side and a first inclined face 8a adjacent to the inclined face 8b.

The first inclined face 8a and the second inclined face 8b respectively have inclination angles $\beta1$ and $\beta2$, and the inclination angle $\beta2$ is larger than the inclination angle $\beta1$. The first inclined face 8a of the second guide surface 8 is a guide region that guides rolling bodies 10 with the first guide surface 6 when the moving member 5 is in a former moving process part, and the second inclined face 8b is a guide region that guides the rolling bodies 10 with the first guide surface 6 when the moving member 5 is in a latter moving process part. Similarly to the first embodiment, in the former moving process part of the moving member 5, the rolling bodies 10 are quickly moved in the direction of the axis 44 by the smaller inclination angle of the guide surface 8, thereby increasing the speed of clamping operation. In contrast, in the latter moving process part of the moving member 5, the degree of force increase is increased by the larger inclination angle of the guide surface 8, thereby applying a large pressing force to the clamp disc 18.

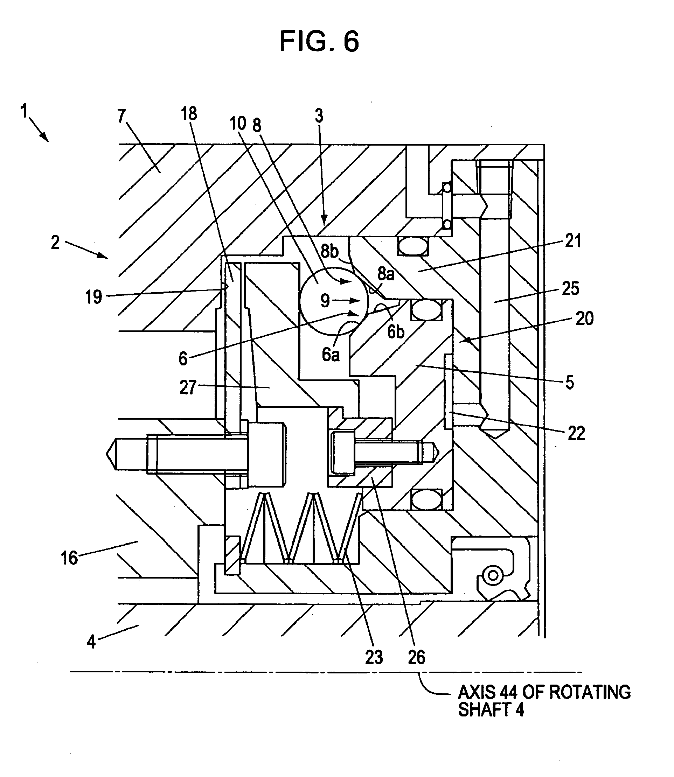

Fig. 6 illustrates a further embodiment of the present invention, in which a first guide surface 6 provided on a moving member 5 is formed by a first inclined face 6a and a second inclined face 6b, and a second guide surface 8 provided on a cylinder 21 is formed by a first inclined face 8a and a second inclined face 8b. Similarly to the above-described embodiments, inclination angles of the guide surfaces 6 and 8 with respect to their inclination references are set to be small in a former moving process part of the moving member 5, thereby quickly moving rolling bodies 10 in the direction of an axis 44 so as to increase the speed of clamping operation. In contrast, in a latter moving process part of the moving member 5, both of the inclination angles of the guide surface 6 and 8 are set to be large so as to increase the degree of force increase and to apply a large pressing force to a clamp disc 18. In this embodiment, a transition time of the rolling bodies 10 from the first inclined face 6a or 8a to the second inclined face 6b or 8b can be different between the first guide surface 6 and the second guide surface 8. By performing transition of the rolling bodies 10 from the first inclined face 6a to the second inclined face 6b and contact transition from the first inclined face 8a to the second inclined face 8b at different times, the pressing force can be increased in two steps. Hence, it is possible to suppress breakage and wear of the rolling bodies 10 and the guide surfaces 6 and 8 due to the application of impact force.

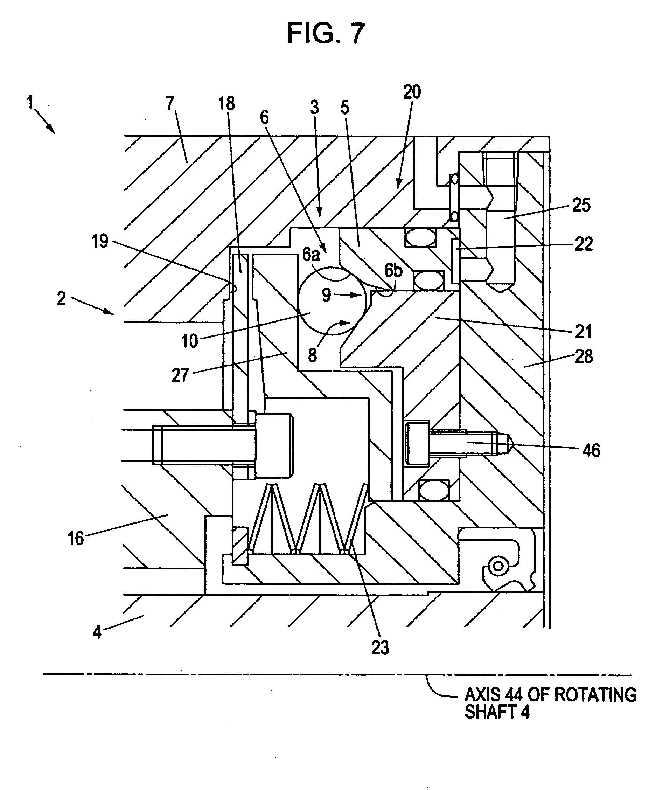

Fig. 7 illustrates an even further embodiment of the present invention. In contrast to the above-described embodiments in which the cylinder 21 fixed to the frame 7 by the bolts 45 forms an outer side wall and inner side wall of the fluid-pressure cylinder device 20 in the radial direction so as to surround the moving member 5 serving as the annular piston, in this embodiment, a cylinder 21 fixed by bolts 46 to a cylinder base 28, which is fixed to a frame 7 by unillustrated bolts, forms an inner side wall of a fluid-pressure cylinder device 20 in the radial direction, the frame 7 forms an outer side wall of the fluid-pressure cylinder device 20 in the radial direction, and a moving member 5 serving as an annular piston surrounds the cylinder 21. A first guide surface 6 provided on the moving member 5 is formed by two inclined surfaces having different inclination angles with respect to a fist inclination reference defined by a plane orthogonal to an axis 44 of a rotating shaft 4, that is, a first inclined face 6a provided at a leading end side, and a second inclined face 6b adjacent to the inclined surface 6a. The first inclined face 6a and the second inclined face 6b respectively have inclination angles $\alpha1$ and $\alpha2$, and the inclination angle $\alpha2$ is larger than the inclination angle $\alpha1$.

In this way, either of the first guide surface 6 provided on the moving member 5 and a second guides surface 8 provided on the frame 7 and at the boundary with the moving member 5 so as to form a V-groove 9 in cooperation with the first guide surface 6 may be placed on an inner side or an outer side in the positional relationship in the radial direction of the rotating shaft 4.

In the above-described embodiments, it is preferable that a boundary portion between the first inclined face 6a and the second inclined face 6b on the moving member 5 and a boundary portion between the first inclined face 8a and the second inclined face 8b on the cylinder 21 be formed by smooth curved surfaces in order to prevent breakage and wear of the guide surfaces 6 and 8 and the rolling bodies 10.

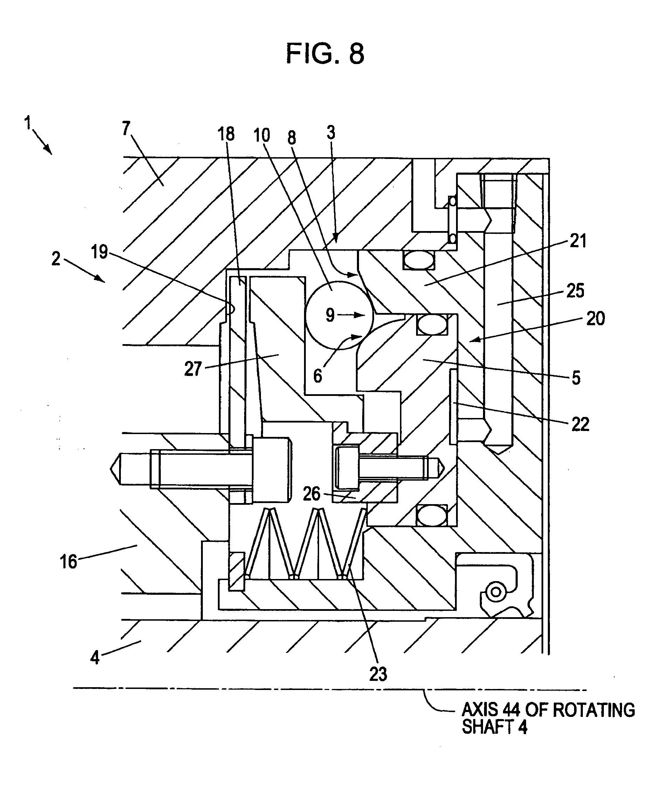

Fig. 8 illustrates a still even further embodiment of the present invention, in which a first guide surface 6 on a moving member 5 is formed by a curve in a cross-sectional view including an axis 44 of a rotating shaft 4. The curve extends from a portion corresponding to a standby position of the moving member 5 toward a portion corresponding to a clamp position of the moving member 5 in a manner such that the inclination of a tangent to the curve with respect to an inclination reference gradually increases. That is, the inclination of the tangent to the curve with respect to the inclination reference in a guide region corresponding to a former moving process part is smaller than the inclination in a guide region corresponding to a latter moving process part. Thereby, in this embodiment, in a process in which the moving member 5 moves from the standby position to the clamp position to press an unclamped member, the moving speed of rolling bodies 10 in the direction of the axis 44 is changed in a stepless manner. In the former moving process part of the moving member 5, the inclination angle of the guide surface 6 is set to be small so that the rolling bodies 10 quickly move in the axial direction. In contrast, in the latter moving process part of the moving member 5, the inclination angle of the guide surface 6 is set to be large so as to apply a large pressing force to a clamp disc 18.

While only one of the first guide surface 6 on the moving member 5 and the second guide surface 8 on the cylinder 21, that is, only the first guide surface 6 is formed by a curved surface in this embodiment, the second guide surface 8 may be formed by a curved surface, or both of the first guide surface 6 and the second guide surface 8 may be formed by curved surfaces.

While the rolling bodies 10 press the clamp disc 18 via the clamp member 27 and press the clamp disc 18 via the intermediate member in the above embodiment, they may directly press the clamp disc 18 not via the intermediate member, as described above. Further, while the fluid-pressure cylinder device 20 is provided as the device for generating the pressing force of the moving member 5, for example, a ball screw mechanism to be driven by a motor may be used. Moreover, while the moving member 5 is moved toward a side opposite the clamp disc 18 by the biasing force of the spring or the like in an unclamp state, the moving member 5 may be moved toward the side opposite the clamp disc 18 by using a device that needs power, such as a fluid-pressure cylinder device. In addition, a biasing device that does not use power, such as a spring, may be used as the pressing-force generating means, and the moving member 5 may be always biased toward the clamp disc 18 by the spring or the like so as to clamp the rotating shaft 4. In this case, the moving member 5 is directly moved against the biasing force of the spring or the like toward the side opposite the clamp disc 18 with the fluid-pressure cylinder device or the like, not via the force increasing device in the unclamp state, which prevents the rotating shaft 4 from being unclamped, for example, in case of power failure. Further, while the clamp disc 18 is fixed to the rotating shaft 4, it may be fixed to the frame 7. In this case, the clamp disc 18 is pressed against the clamp surface 19 provided on the rotating shaft 4.

The present invention is not limited to any of the above-described embodiments, and various modifications are possible without departing from the scope of claims of the present invention.

## Claims

1. A force increasing device (3) of a clamping device for an indexing table, comprising:

   a clamped member (18) provided integrally with one of a frame (7) and a rotating shaft (4);
   a moving member (5) that has a first guide surface (6) inclined with respect to a first inclination reference defined by a plane orthogonal to an axis of a rotating shaft (4) to be rotated for indexing and that is movable in a direction of the axis of the rotating shaft (4),
   a second guide surface (8) provided in the frame (7) and inclined with respect to a second inclination reference defined by the axis of the rotating shaft (4);
   a plurality of rolling bodies (10) in contact with both the first guide surface (6) and the second guide surface (8) in a V-groove (9) formed by the first guide surface (6) and the second guide surface (8), and
   a clamp member (27) provided between the rolling bodies (10) and the clamped member (18) and movable in the direction of the axis of the rotating shaft (4),
   wherein a pressing force of the moving member (5) is increased and applied to the clamp member (27) via the plurality of rolling bodies (10) in contact with the first guide surface (6) and the second guide surface (8) of the V-groove (9), and the clamp member (27) presses the clamped member (18) against a clamp surface (19) provided in the other of the frame (7) and the rotating shaft (4) with the increased pressing force of the moving member (5) to clamp the rotating shaft (4) by a frictional force generated between the clamp surface (19) and the clamped member (18), and
   wherein a guide region of at least one of the first guide surface (6) and the second guide surface (8) that guides the rolling bodies (10) in a former moving process part of a moving process in which the moving member (5) moves from a standby position to a clamp position to press the clamped member (18) is inclined with respect to the inclination reference at a smaller angle than a guide region that guides the rolling bodies (10) in a latter moving process part, and
   wherein the pressing force is applied to the clamp member (27) by the rolling bodies (10) through movement of the moving member (5) in the former moving process part to move the clamp member (27) toward the clamped member (18), and the clamp member (27) presses the clamped member (18) through movement of the moving member (5) in the latter moving process part.

2. The force increasing device (3) of the clamping device for the indexing table according to Claim 1, wherein at least one of the first guide surface (6) and the second guide surface (8) includes a first inclined face (6a, 8a) serving as the guide region corresponding to the former moving process part of the moving member (5) and a second inclined face (6b, 8b) provided adjacent to the first inclined face (6a, 8a) and serving as the guide region corresponding to the latter moving process part of the moving member (5), and wherein the first inclined face (6a, 8a) is inclined with respect to the inclination reference at a smaller angle than the second inclined face (6b, 8b).

3. The force increasing device (3) of the clamping device for the indexing table according to Claim 1, wherein at least one of the first guide surface (6) and the second guide surface (8) forms a curve in a cross section including the axis of the rotating shaft (4), and wherein an inclination of a tangent to the curve with respect to the inclination reference gradually increases from a portion corresponding to the standby position of the moving member (5) toward a portion corresponding to the clamp position of the moving member (5).

4. A force increasing device (3) of a clamping device for an indexing table, comprising:

   a clamped member (18) provided integrally with one of a frame (7) and a rotating shaft (4);
   a moving member (5) that has a first guide surface (6) inclined with respect to a first inclination reference defined by a plane orthogonal to an axis of the rotating shaft (4) to be rotated for indexing and that is movable in a direction of the axis of the rotating shaft (4);

a second guide surface (8) provided in the frame (7) and inclined with respect to a second inclination reference defined by the axis of the rotating shaft (4); and

a plurality of rolling bodies (10) in contact with both the first guide surface (6) and the second guide surface (8) in a V-groove (9) formed by the first guide surface (6) and the second guide surface (8),

wherein a pressing force of the moving member (5) is increased and applied to the clamped member (18) via the plurality of rolling bodies (10) in contact with the first guide surface (6) and the second guide surface (8) of the V-groove (9), and the clamped member (18) is pressed against a clamp surface (19) provided in the other of the frame (7) and the rotating shaft (4) with the increased pressing force of the moving member (5) to clamp the rotating shaft (4) by a frictional force generated between the clamp surface (19) and the clamped member (18), and

wherein a guide region of at least one of the first guide surface (6) and the second guide surface (8) that guides the rolling bodies (10) in a former moving process part of a moving process in which the moving member (5) moves from a standby position to a clamp position to press the clamped member (18) is inclined with respect to the inclination reference at a smaller angle than a guide region that guides the rolling bodies (10) in a latter moving process part, and

wherein the pressing force is applied to the clamped member (18) by the rolling bodies (10) through movement of the moving member (5) in the former moving process part to move the clamped member (18) toward the clamp surface (19), and the clamped member (18) is pressed against the clamp surface (19) through movement of the moving member (5) in the latter moving process part.

**Patentansprüche**

1. Kraftverstärkungsvorrichtung (3) einer Klemmvorrichtung für einen Rundschalttisch umfassend:

    ein geklemmtes Element (18), das integral mit einem von einem Gestell (7) und einer Drehwelle (4) vorgesehen ist;

    ein sich bewegendes Element (5), das eine erste Führungsfläche (6) umfasst, die bezüglich einer ersten Neigungsreferenz geneigt ist, die über eine Ebene orthogonal zu einer Achse der Drehwelle (4), die für ein Schalten gedreht werden soll, definiert ist, und, das in eine Richtung der Achse der Drehwelle (4) bewegbar ist,

eine zweite Führungsfläche (8), die in dem Gestell (7) vorgesehen ist und bezüglich einer zweiten Neigungsreferenz geneigt ist, die über die Achse der Drehwelle (4) definiert ist;

mehrere rollende Körper (10), die in Kontakt mit beiden der ersten Führungsfläche (6) und der zweiten Führungsfläche (8) stehen in einer V-förmigen Ausnehmung (9), die über die erste Führungsfläche (6) und die zweite Führungsfläche (8) gebildet ist, und

ein Klemmelement (27), das zwischen den rollenden Körpern (10) und dem geklemmten Element (18) vorgesehen ist und in der Richtung der Achse der Drehwelle (4) bewegbar ist,

wobei eine Presskraft des sich bewegenden Elements (5) erhöht wird und auf das Klemmelement (27) über die mehreren rollenden Körper (10), die in Kontakt mit der ersten Führungsfläche (6) und der zweiten Führungsfläche (8) der V-förmigen Ausnehmung (9) stehen, angewendet wird, und das Klemmelement (27) das geklemmte Element (18) gegen eine Klemmfläche (19), die in dem anderen von dem Gestell (7) und der Drehwelle (4) vorgesehen ist, mit der erhöhten Presskraft des sich bewegenden Elementes (5) presst, um die Drehwelle (4) über eine Reibkraft, die zwischen der Klemmfläche (19) und dem geklemmten Element (18) erzeugt wird, zu klemmen, und

wobei ein Führungsbereich von wenigstens einem von der ersten Führungsfläche (6) und der zweiten Führungsfläche (8), die die rollenden Körper (10) in einem ersten Bewegungsprozess führt, der Teil eines Bewegungsprozesses ist, in dem sich das sich bewegende Element (5) von einer Standby-Position zu einer Klemmposition bewegt, um das geklemmte Element (18) zu pressen, bezüglich der Neigungsreferenz in einem geringeren Winkel als ein Führungsbereich, der die rollenden Körper (10) in einem letzteren Bewegungsprozessteil führt, geneigt ist, und

wobei die Presskraft auf das Klemmelement (27) über die rollenden Körper (10) durch eine Bewegung des sich bewegenden Elements (5) in dem ersten Bewegungsprozessteil angewendet wird, um das Klemmelement (27) zu dem geklemmten Element (18) zu bewegen, und das Klemmelement (27) das geklemmte Element (18) durch eine Bewegung des sich bewegenden Elements (5) in dem letzteren Bewegungsprozessteil presst.

2. Kraftverstärkungsvorrichtung (3) der Klemmvorrichtung für den Rundschalttisch gemäß Anspruch 1, bei der wenigstens eine von der ersten Führungsfläche (6) und der zweiten Führungsfläche (8) eine erste geneigte Fläche (6a, 8a) umfasst, die als der Führungsbereich korrespondierend zu dem ersten Bewegungsprozessteil des sich bewegenden Elementes (5) dient und eine zweite geneigte Fläche (6b, 8b), die gegenüberliegend zu der ersten geneigten Fläche (6a, 8a) vorgesehen ist und als der Führungsbereich korrespondierend zu dem letzteren Bewegungsprozessteil des sich bewegenden Elements (5) dient, und wobei die erste geneigte Fläche (6a, 8a) bezüglich der Neigungsreferenz in einem schmaleren Winkel als die zweite geneigte Fläche (6b, 8b) geneigt ist.

3. Kraftverstärkungsvorrichtung (3) der Klemmvorrichtung für den Rundschalttisch gemäß Anspruch 1, bei der die wenigstens eine von der ersten Führungsfläche (6) und der zweiten Führungsfläche (8) eine Kurve in einem Querschnitt einschließlich der Achse der Drehwelle (4) bildet, und wobei eine Neigung von einer Tangente zu der Kurve bezüglich der Neigungsreferenz sich graduell von einem Bereich korrespondierend zu der Standby-Position des sich bewegenden Elementes (5) zu einem Bereich korrespondierend zu der Klemmposition des sich bewegenden Elementes (5) erhöht.

4. Kraftverstärkungsvorrichtung (3) einer Klemmvorrichtung für einen Rundschalttisch umfassend:

ein geklemmtes Element (18), das integral mit einem von einem Gestell (7) und einer Drehwelle (4) vorgesehen ist;

ein sich bewegendes Element (5), das eine erste Führungsfläche (6) umfasst, die bezüglich einer ersten Neigungsreferenz geneigt ist, die über eine Ebene orthogonal zu einer Achse der Drehwelle (4), die für ein Schalten gedreht werden soll, definiert ist, und das in eine Richtung der Achse der Drehwelle (4) bewegbar ist;

eine zweite Führungsfläche (8), die in dem Gestell (7) vorgesehen ist und bezüglich einer zweiten Neigungsreferenz, die über die Achse der Drehwelle (4) definiert ist, geneigt ist; und

mehrere rollende Körpern (10), die in Kontakt mit beiden der ersten Führungsfläche (6) und der zweiten Führungsfläche (8) stehen in einer V-förmigen Ausnehmung (9), die über die erste Führungsfläche (6) und die zweite Führungsfläche (8) gebildet ist,

wobei eine Presskraft des sich bewegenden Elements (5) erhöht wird und auf das geklemmte Element (18) über die mehreren rollenden Körper (10), die in Kontakt mit der ersten Führungsfläche (6) und der zweiten Führungsfläche (8) der V-förmigen Ausnehmung (9) stehen, angewendet wird, und das geklemmte Element (18) gegen eine Klemmfläche (19), die in dem anderen von dem Gestell (7) und der Drehwelle (4) vorgesehen ist, mit der erhöhten Presskraft des sich bewegenden Elementes (5) gepresst wird, um die Drehwelle (4) über eine Reibkraft, die zwischen der Klemmfläche (19) und dem geklemmten Element (18) erzeugt wird, einzuklemmen, und

wobei ein Führungsbereich von wenigstens einer von der ersten Führungsfläche (6) und der zweiten Führungsfläche (8), die die rollenden Körper (10) in einem ersten Bewegungsprozessteil von einem Bewegungsprozess führt, in dem sich das sich bewegende Element (5) von einer Standby-Position zu einer Klemmposition bewegt, um das geklemmte Element (18) zu pressen, bezüglich der Neigungsreferenz in einem geringeren Winkel als ein Führungsbereich geneigt ist, der die rollenden Körper (10) in einem späteren Bewegungsprozessteil führt, und wobei die Presskraft auf das geklemmte Element (18) über die rollenden Körper (10) durch eine Bewegung des sich bewegenden Elements (5) in dem ersten Bewegungsprozessteil angewendet wird, um das geklemmte Element (18) zu der Klemmfläche (19) zu bewegen, und das geklemmte Element (18) durch eine Bewegung des sich bewegenden Elements (5) in dem letzteren Bewegungsprozessteil gegen die Klemmfläche (19) gepresst wird.

## Revendications

1. Dispositif d'augmentation de force (3) d'un dispositif de serrage pour une table d'indexage, comprenant :

un élément serré (18) prévu de manière solidaire avec l'un parmi un châssis (7) et un arbre de rotation (4) ;

un élément mobile (5) qui a une première surface de guidage (6) inclinée par rapport à une première référence d'inclinaison définie par un plan orthogonal à un axe d'un arbre de rotation (4) destiné à être entraîné en rotation pour l'indexation et qui est mobile selon une direction de l'axe de l'arbre de rotation (4),

une seconde surface de guidage (8) prévue dans le châssis (7) et inclinée par rapport à une seconde référence d'inclinaison définie par l'axe de l'arbre de rotation (4) ;

une pluralité de corps roulants (10) en contact à la fois avec la première surface de guidage (6) et la seconde surface de guidage (8) dans une rainure en V (9) formée par la première surface de guidage (6) et la seconde surface de guidage (8), et

un élément de serrage (27) prévu entre les corps roulants (10) et l'élément serré (18) et mobile dans la direction de l'axe de l'arbre de rotation (4),

dans lequel une force de pression de l'élément mobile (5) est augmentée et appliquée sur l'élément de serrage (27) via la pluralité de corps roulants (10) en contact avec la première surface de guidage (6) et la seconde surface de guidage (8) de la rainure en V (9), et l'élément de serrage (27) comprime l'élément serré (18) contre une surface de serrage (19) prévue dans l'autre parmi le châssis (7) et l'arbre de rotation (4) avec la force de pression augmentée de l'élément mobile (5) pour serrer l'arbre de rotation (4) par une force de friction générée entre la surface de serrage (19) et l'élément serré (18), et

dans lequel une région de guidage d'au moins l'une parmi la première surface de guidage (6) et la seconde surface de guidage (8) qui guide les corps roulants (10) dans une première partie de processus de déplacement d'un processus de déplacement dans lequel l'élément mobile (5) passe d'une position d'attente à une position de serrage pour comprimer l'élément serré (18) est inclinée, par rapport à la référence d'inclinaison, à un plus petit angle qu'une région de guidage qui guide les corps roulants (10) dans une dernière partie de processus de déplacement, et dans lequel la force de pression est appliquée sur l'élément de serrage (27) par les corps roulants (10) par le biais du déplacement de l'élément mobile (5) dans la première partie de processus de déplacement afin de déplacer l'élément de serrage (27) vers l'élément serré (18), et l'élément de serrage (27) comprime l'élément serré (18) par le biais du déplacement de l'élément mobile (5) dans la dernière partie de processus de déplacement.

2. Dispositif d'augmentation de force (3) du dispositif de serrage pour la table d'indexage selon la revendication 1, dans lequel au moins l'une parmi la première surface de guidage (6) et la seconde surface de guidage (8) comprend une première face inclinée (6a, 8a) servant de région de guidage correspondant à la première partie de processus de déplacement de l'élément mobile (5) et une seconde face inclinée (6b, 8b) prévue de manière adjacente à la première face inclinée (6a, 8a) et servant de région de guidage correspondant à la dernière partie de processus de déplacement de l'élément mobile (5), et dans lequel la première face inclinée (6a, 8a) est inclinée par rapport à la référence d'inclinaison à un plus petit angle que la seconde face inclinée (6b, 8b).

3. Dispositif d'augmentation de force (3) du dispositif de serrage pour la table d'indexage selon la revendication 1, dans lequel au moins l'une parmi la première surface de guidage (6) et la seconde surface de guidage (8) forme une courbe dans une section transversale comprenant l'axe de l'arbre de rotation (4) et dans lequel une inclinaison d'une tangente à la courbe par rapport à la référence d'inclinaison augmente progressivement à partir d'une partie correspondant à la position d'attente de l'élément mobile (5) vers une partie correspondant à la position de serrage de l'élément mobile (5).

4. Dispositif d'augmentation de force (3) du dispositif de serrage pour la table d'indexage comprenant :

un élément serré (18) prévu de manière solidaire avec l'un parmi un châssis (7) et un arbre de rotation (4) ;
un élément mobile (5) qui a une première surface de guidage (6) inclinée par rapport à une première référence d'inclinaison définie par un plan orthogonal à un axe de l'arbre de rotation (4) destiné à être entraîné en rotation pour l'indexation et qui est mobile selon une direction de l'axe de l'arbre de rotation (4) ;
une seconde surface de guidage (8) prévue dans le châssis (7) et inclinée par rapport à une seconde référence d'inclinaison définie par l'axe de l'arbre de rotation (4) ; et
une pluralité de corps roulants (10) en contact à la fois avec la première surface de guidage (6) et la seconde surface de guidage (8) dans une rainure en V (9) formée par la première surface de guidage (6) et la seconde surface de guidage (8),

dans lequel une force de pression de l'élément mobile (5) est augmentée et appliquée sur l'élément serré (18) via la pluralité de corps roulants (10) en contact avec la première surface de guidage (6) et la seconde surface de guidage (8) de la rainure en V (9), et l'élément serré (18) est comprimé contre une surface de serrage (19) prévue dans l'autre parmi le châssis (7) et l'arbre de rotation (4) avec la force de pression augmentée de l'élément mobile (5) pour serrer l'arbre de rotation (4) par une force de friction générée entre la surface de serrage (19) et l'élément serré (18), et

dans lequel une région de guidage d'au moins l'une parmi la première surface de guidage (6) et la seconde surface de guidage (8) qui guide les corps roulants (10) dans une première partie de processus de déplacement d'un processus de déplacement dans lequel l'élément mobile (5) passe d'une position d'attente à une position de serrage pour comprimer l'élément serré (18) est inclinée, par rapport à la référence d'inclinaison, à un plus petit angle qu'une région de guidage qui guide les corps roulants (10) dans une dernière partie de processus de déplacement, et dans lequel la force de pression est appliquée sur l'élément serré (18) par les corps roulants (10) par le biais du déplacement de l'élément mobile (5) dans la première partie de processus de déplacement pour déplacer l'élément serré (18) vers la surface de serrage (19), et l'élément serré (18) est comprimé contre la surface de serrage (19) par le biais du déplacement de l'élément mobile (5) dans la dernière partie de processus de déplacement.

# FIG. 1

# FIG. 2

AXIS 44 OF ROTATING
SHAFT 4

# FIG. 3

## (a)

GUIDE REGION CORRESPONDING TO ABOVE MOVING PROCESS

GUIDE REGION CORRESPONDING TO LATTER MOVING PROCESS

$\alpha1 < \alpha2$

FIRST INCLINATION REFERENCE (PLANE ORTHOGONAL TO AXIS 44)

6b

$\alpha2$

6a  $\alpha1$

6

5

AXIS 44 OF ROTATING SHAFT 4

## (b)

$\beta1 < \beta2$

8b

21

GUIDE REGION CORRESPONDING TO LATTER MOVING PROCESS

$\beta2$

GUIDE REGION CORRESPONDING TO ABOVE MOVING PROCESS

$\beta1$

8a

8

SECOND INCLINATION REFERENCE (AXIS 44 OF ROTATING SHAFT 4)

# FIG. 4

AXIS 44 OF ROTATING
SHAFT 4

# FIG. 5

AXIS 44 OF ROTATING
SHAFT 4

# FIG. 6

AXIS 44 OF ROTATING
SHAFT 4

# FIG. 7

EP 2 253 424 B1

# FIG. 8

AXIS 44 OF ROTATING
SHAFT 4

21

# FIG. 9

AXIS 44 OF ROTATING SHAFT

**EP 2 253 424 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0782901 A1
- JP 3713190 B